## Europäisches Patentamt

## European Patent Office

## Office européen des brevets

(11) Publication number: **0 196 072**
**A2**

# EUROPEAN PATENT APPLICATION

(21) Application number: **86104109.3**

(22) Date of filing: **25.03.86**

(51) Int. Cl.⁴: **C 09 D 5/08**

(30) Priority: **28.03.85 US 717259**
**28.03.85 US 717047**

(43) Date of publication of application: **01.10.86**
**Bulletin 86/40**

(84) Designated Contracting States: **AT BE DE FR GB IT NL SE**

(71) Applicant: **AMCHEM PRODUCTS, INC., 300 Brookside Avenue, Ambler Pennsylvania 19002 (US)**

(72) Inventor: **Hall, Wilbur S., Hansons Ridge, Springvale Maine 040 83 (US)**

(74) Representative: **von Kreisler, Alek, Dipl.-Chem. et al, Deichmannhaus am Hauptbahnhof, D-5000 Köln 1 (DE)**

(54) Iodine compound activation of autodepositing baths.

(57) An autodepositing composition for forming an autodeposited resinous coating on a metallic surface comprising an acidic aqueous solution having dissolved therein acid and oxidizing agent and having dispersed therein resin solids, wherein said oxidizing agent is an iodine-containing compound and wherein the resin of said resin solids is preferably a resin which includes in its polymeric structure unsaturated groups in the form of a carbon-to-carbon double bond.

1

## IODINE COMPOUND ACTIVATION
## OF AUTODEPOSITING BATHS

### Field of the Invention

This invention relates to an activating system for coating compositions used in the autodeposition of resinous coatings on metallic surfaces, including, for example, surfaces comprising iron, zinc, and alloys of iron and of zinc.

### Reported Developments

Compositions and processes for autodepositing coating of an organic polymer on a metallic surface are now well known, having been disclosed in related U.S. Patent Nos. 3,585,084 and 3,592,699 to Steinbrecher and Hall, both assigned to Amchem Products, Inc., Ambler, Penn., U.S.A., as well as in later U.S. Patent No. 3,709,743, among others.

These patents, as well as U.S. Patent No. 4,373,050 to Steinbrecher and Hall, also assigned to Amchem Products, Inc., all disclose the need for an activating system which includes an oxygen-containing oxidizing agent in an aqueous coating composition which also includes acid and resin. The oxidizing agent referred to in this patent is described as being a substance which has, or promotes in aqueous solution, a positive reduction potential greater than that of hydrogen.

U.S. Patent Nos. 3,585,084 and 4,373,050 disclose as utilizable oxidizing agents the following: hydrogen peroxide, dichromate, persulfate, perborate, bromate, chlorate, permanganate, nitrite, and nitrate, in the form of alkali and ammonium salts. Hydrogen peroxide and dichromates are disclosed as being preferred oxidizing agents.

U.S. Patent No. 3,592,699 discloses only the use of hydrogen peroxide or dichromate ion as the oxidizing agent.

U.S. Patent No. 3,709,743 discloses using an oxidizing acid as the oxidizing agent. Only nitric acid is specifically disclosed and it is used in all of the examples of the coating compositions which are the subject of this patent. Comparative compositions in which hydrochloric acid and hydrofluoric acid were substituted for nitric acid.are described as ineffective in forming coatings.

U.K. Patent No. 1,241,991 discloses autodepositing compositions which contain, as the oxidizing agent, those oxidants which are known as depolarizers. The following are disclosed as examples of depolarizers which can be used: p-benzoquinone; p-nitrophenol; hydrogen peroxide; alkali metal and ammonium persulfates and nitrates; and nitric acid. The patent disclaims use of the following oxidizing agents: permanganates; ferric and cerric salts; chromates; and dichromates.

South African Patent No. 72/1146 discloses autodeposting compositions in which ferric iron is the essential oxidizing agent and which include, as optional oxidizing agents, oxidizing agents of the type referred to in the aforementioned '084 and '050 patents. U.S. Patent No. 4,414,350 discloses that the use of such compositions' results in the build up in the composition of ferrous iron which tends to destabilize the composition. To cope with this problem, the '350 patent discloses the use of a carboxylic acid which forms a soluble complex with excess ferrous iron. Examples of such acids are acetic, itaconic, succinic, acrylic, and citric, the last mentioned being preferred.

In the known autodepositing compositions and processes, partially exemplified by the foregoing related art, gassing will occasionally occur when the oxidizing agent, particularly hydrogen peroxide, reacts with iron compounds that are present. This gassing is probably the cause of discontinuities in the autodeposited coating and this in turn can lead to decreased resistance in corrosion.

Hydrogen peroxide is one of the most frequently mentioned oxidants for use in prior art autodepositing compositions. It is disclosed for use as a make-up constituent of the autodepositing composition and also for use in maintaining the stability of an autodepositing composition of the type which does not contain hydrogen peroxide as a make-up constituent. As to this latter use, U.S. Patent No. 4,186,219 discloses the use of hydrogen peroxide in an autodepositing composition comprising latex, hydrofluoric acid and ferric fluoride ($FeF_3$). In such a system, the ferric fluoride acts as an oxidizer for the iron-containing ($Fe^\circ$) substrate to be coated. As substrate is processed ferric iron

($Fe^{+3}$) of the ferric fluoride is reduced to ferrous iron ($Fe^{+2}$) and substrate iron is oxidized to ferrous iron. This results in a decrease in oxidizing potential and a build up of ferrous iron in the composition. If ferrous iron is allowed to increase in concentration without limit, it will cause destabilization of the entire coating composition. Hydrogen peroxide is added, not to oxidize iron of the substrate, but to oxidize ferrous iron to the ferric state. This restores the original oxidizing potential of the bath and it also controls the amount of ferrous iron in the composition at a level which insures the stability of the bath.

However, if hydrogen peroxide is added in excess of the amount required to restore the oxidizing potential of the autodepositing composition, it will cause undue and inefficient dissolution of the iron-containing substrate, and an increase in the total amount of ferric fluoride in the coating composition. As the concentration of ferric fluoride further increases, so does the dissolution rate of the iron-containing substrate, and the autodepositing process becomes difficult to control.

Moreover, hydrogen peroxide is a very powerful oxidizer which, when added to the autodepositing coating composition to restore its original redox potential, can attack the stabilizer of the latex. This can cause still further problems, such as soft coatings which show decreased resistance to water rinsing which is effected after removal of the coated substrate from the autodepositing composition.

## SUMMARY OF THE INVENTION

In accordance with the present invention, there is provided an autodepositing composition for forming an autodeposited resinous coating on a metallic surface comprising an acidic aqueous solution having dissolved therein acid and oxidizing agent and having dispersed therein resin solids, said ingredients being present in amounts effective to form said coating, and wherein said oxidizing agent is elemental iodine complexed with a water soluble iodide, an iodate salt or free acid, a periodate salt or free acid, or any mixture of the foregoing.

In preferred form, the autodepositing composition of the present invention comprises resin solids which include in the polymeric structure of the resin unsaturated groups in the form of a carbon-to-carbon double bond. As discussed in detail hereinbelow, the use of such an unsaturated resin in combination with the iodine-containing oxidizing agent of the present invention provides a composition which is capable of forming autodeposited coatings which exhibit significant improvements in corrosion-resistant properties. As explained below, it is believed that such improvements are realized as a result of the addition of iodine to the carbon atom(s) of the double bonds of the unsaturated groups, such addition tending to reduce the porosity of the autodeposited coating. Accordingly, another aspect of the present invention is the provision of an autodeposited coating which in fused or cured form includes resin in which iodine is bonded to one or more carbon atoms which are present in the polymeric structure of the resin and which were originally linked by double bonds.

There is evidence to indicate that improvements in corrosion resistance of coatings formed from the composition of the present invention are also realized as a result of the formation of a light or thin conversion coating sandwiched between the surface of the metallic substrate and the overlying autodeposited resinous coating. Such conversion coating is formed and improvements in corrosion resistance are realized irrespective of the presence of unsaturation in the resin solids used in the autodepositing composition.

Other preferred forms of the invention include the use of a latex as the source of resin solids comprising the composition and the use of hydrofluoric acid as the acid constituent in a composition which does not include a material which tends to be degraded by hydrofluoric acid, for example, silicate pigments which are HF-sensitive. When formulating the iodine-containing autodeposited composition from an HF-sensitive material, it is preferred that acetic acid be used as the acid constituent.

The present invention provides also a process for forming on metallic surfaces an autodeposited coating utilizing an iodine-containing autodepositing composition of the type referred to above and described in greater detail hereinbelow. In preferred form, the metallic surface is immersed in the autodepositing composition for a period of time sufficient to form on the metallic surface an autodeposited coating of desired thickness. It is believed that the composition of the present invention will be used most widely in forming autodeposited coatings on surfaces comprising iron or zinc or alloys of iron (especially steel) or of zinc. However, other types of metallic surfaces may also be coated.

Compositions containing the iodine-containing oxidizing agent of the present invention exhibit good stability during use, are easy to control, and are capable of forming in a consistent manner uniformly thick aesthetic coatings. The iodate and periodate compounds are particularly good in this regard. In addition, the rate of deposition of the coating can be controlled readily by varying the redox potential of the composition and/or amount of resin solids included in a bath of the composition.

Other than in the operating examples, or where otherwise indicated, all numbers expressing quantities of ingredients or reaction conditions used herein are to be understood or modified in all instances by the term "about".

## DETAILED DESCRIPTION OF THE INVENTION

Autodepositing coating compositions of the present invention comprise acidic aqueous solutions of acid and an iodine-containing oxidizing agent and have dispersed therein resin solids. The compositions can contain optionally pigment, surfactant, and other auxiliaries or additives.

The resin constituent of autodepositing compositions comprises typically solid particles of resin which are dispersed in the aqueous phase of the composition and which are stable in the acidic medium of the composition. The autodepositing composition of the present invention also comprises such solid particles of dispersed resin. According to prior art disclosures, the preferred source of such resin solids is a latex. In accordance with the present invention a latex is also the preferred source of the resin constituent.

The preferred resin for use in the present invention comprises one or more resins which are unsaturated, that is, a resin which has in its structure at least one group containing a carbon to carbon double bond. Such unsaturation may be present in the backbone or in a branch chain of the polymer comprising the resin as recurring groups of carbon to carbon double bonds. The unsaturation may also be present in both the backbone and branch chain.

The preferred resin may comprise a homopolymer, a copolymer or a higher form polymer provided that at least one of the constituent groups comprising the polymer has a recurring unsaturated group. Such resins may comprise, for example, unsaturated polymers prepared from $C_{4-9}$ alkadiene monomers such as butadienes, pentadienes and hexadienes, as well as substituted $C_{4-9}$ alkadienes such as isoprene (2-methyl-1,3-butadiene), chloroprene (2-chloro-1,3-butadiene), and 2,3-dimethyl-1,3-butadiene. Of these monomers, the butadienes and isoprene are preferred, the butadienes being most preferred.

Resins comprising copolymers are generally preferred over those comprising homopolymers, provided that at least one of the polymeric group is unsaturated. Examples of useful copolymers include, but are not limited to: styrene/butadiene; styrene/butadiene/acrylonitrile; styrene/butadiene/acrylic acid; styrene/butadiene/methacrylic acid; styrene/butadiene/butyl-acrylate; styrene/butadiene/butylacrylate/acrylic acid; styrene/butadiene/butylacrylate/methacrylic acid; butadiene/acrylonitrile/methacrylic acid; styrene/penta-diene; styrene/hexadiene; styrene/isoprene; styrene/chloroprene; and styrene dimethyl-butadiene. Styrene/butadiene copolymers are preferred.

The preferred source of the unsaturated resin is a latex thereof. Latices comprising unsaturated resins are commercially available and have been disclosed in numerous patents, including, for example, U.S. Patent No. 3,472,808. The resin particles suspended in the latices are preferably of uniform size and composition and may contain agents to assist in the suspension thereof, for example, and preferably, one or more surfactants of the anionic type.

A mixture of two or more resins may be used. The mixture may comprise more than one unsaturated resin or more than one saturated resin or a combination of saturated and unsaturated resins.

The amount of resin solids included in the coating composition may vary within a wide range. The minimum concentration is that which is effective to autodeposit a resinous coating on the object being treated. The maximum concentration is determined by the amount of the resin that physically can be dispersed in the coating composition. A range of 5 to 550 g/l, preferably 75 to 250 g/l, of resin solids is usually adequate, although these ranges may vary depending upon the nature of the resin and the other ingredients comprising the coating composition.

As to the acid constituent, the prior art discloses the use of a variety of different kinds of acids in autodepositing compositions in which they function to attack the metallic surface being coated. Such acids, which comprise both inorganic and organic acids, may be used in the composition of the present invention. A mixture of two or more acids can be used also.

Examples of inorganic acids include hydrochloric acid, phosphoric acid, and hydrofluoric acid, the last mentioned being preferred. Examples of organic acids are acetic, acrylic, adipic, chloroacetic, citric, dichloroacetic, diglycolic, fumaric, gallic, itaconic, lactic, malic, malonic, succinic, and tartaric. Preferred organic acids are acetic, citric, fumaric, diglycolic, and maleic. Acetic acid is the organic acid most preferred.

There are various matters that can be taken into account in determining which acid(s) to use in formulating a composition within the scope of the present invention. Hydrofluoric acid functions particularly well, as it does in heretofore known autodepositing compositions, it being the acid most frequently employed in known commercially available autodepositing compositions. However, hydrofluoric acid is a corrosive material which must be handled with care. Furthermore, because hydrofluoric acid is a solvent for silica, it is not possible to use effectively in an HF-containing autodepositing composition silica-containing pigments and fillers that might otherwise be used to good advantage. Examples of such pigments and fillers include clays, talcs, silicate flatting agents, silicate pigments and the like. Accordingly, although there may be applications where hydrofluoric acid can be used to good advantage, if the aforementioned characteristics of hydrofluoric acid dictate against its use in a particular application, use can be avoided in favor of another acid.

As to the use of other acids, glacial acetic acid ($CH_3COOH$) is not only easier to handle than hydrofluoric acid, but it is also compatible with certain of the pigments and fillers abovementioned. Acetic acid is incompatible with carbonates, hydroxides, many oxides, phosphates, etc., but can be used with most other ingreidents.

The autodepositing composition of the present invention is acidic and should be sufficiently acidic to have the activating system (acid and oxidizing agent) generate sufficient metal ions from the attack of the metallic surface being coated to cause the resin solids of the composition to deposit thereon in the form of an autodeposited coating. For most applications, the pH of the composition will be below 5. A preferred pH is within the range of 1.6 to 3.8. When hydrofluoric acid is used, an amount of 0.4 to 5 g/l is preferred. When acetic acid is used, an amount of 15 to 25 g/l is preferred, with 20 g/l being particularly preferred.

The oxidizing agent for use in the autodepositing composition of this invention comprises: elemental iodine in the form of a water soluble complex; a water soluble iodate or free acid thereof; or a water soluble periodate salt or free acid thereof. A mixture of two or more of the aforementioned iodine-containing oxidizing agents can be used also. The iodine-containing oxidizing agent will generally comprise an iodine-containing acid or an alkali metal or ammonium compound which contains iodine.

The water soluble complex comprises at least one of elemental iodine in the form of a water soluble complex with at least one water soluble iodine salt such as, for example, $LiI$, $NaI$, $KI$, $RbI$, and $NH_4I$. Of these salts, potassium and sodium are preferred, the complexes formed being $KI \cdot I_2$ and $NaI \cdot I_2$. The complex may be prepared _in situ_ by first adding to the coating compositions elemental iodine and then adding the iodine salt, with the salt addition being titrated to the point at which the solid elemental iodine dissolves. The complex can also be added to the composition as an aqueous solution.

Also useful as the oxidizing agent are ternary compounds in which the iodine is combined with oxygen to form an iodate or periodate ion. Any such compounds are useful, provided that they are water soluble. Examples of such compounds are: iodate salts or free acids such as $KIO_3$, $NaIO_3$, $NH_4IO_3$, or $HIO_3$; and periodate salts or free acids such as $KIO_4$, $NaIO_4$, $HIO_4$. Of the foregoing, $HIO_3$ and $HIO_4$ are preferred. The various iodine compounds and complexes may be used individually or in any combination thereof.

Under autodepositing conditions, the iodates and periodates act as oxidants and appear to be reduced to elemental iodine and an iodide. The iodide then complexes with and solubilizes the elemental iodine. Thus, the iodates and periodates not only achieve the same effect as the use of an elemental iodine/iodide complex, namely, to introduce iodine into the autodepositing composition in a solubilized state, but they also are stronger oxidizers, as evidenced by their respective oxidation potentials. The iodates and periodates have a sufficiently high oxidation potential to oxidize ferrous iron to ferric iron. On the other hand, elemental iodine ($I_2$) is capable of oxidizing elemental iron to ferrous iron, but another oxidizing agent should be used with elemental iodine to deter or prevent build up of ferrous iron. Such other oxidizing agent should be one capable of oxidizing ferrous iron to ferric iron. Preferably, an iodate or periodate is used.

It has been observed that compositions containing iodates and periodates can deposit coating more rapidly than those containing elemental iodine. In compositions in which the resin constituent is unsaturated and elemental iodine is the only oxidizer used, the first amounts of iodine added to the composition add directly to carbons of the double bonds. Extra iodine is then needed to provide the oxidation of the substrate metal in order to cause autodeposition.

The present invention contemplates also using in admixture with the iodine-containing oxidizing agent of the present invention a different oxidizing agent, for example, an oxidant of the type used in prior art autodepositing compositions. A prior art oxidizing agent can be used to particular advantage in an application in which the resin solids include unsaturated groups and the iodine-containing oxidizing agent is added to the composition in an amount less than that needed to satisfy all the carbons which are capable of bonding with the iodine or in an amount just sufficient to satisfy all of such carbons. In this type of application, the iodine can function to decrease the permeability of the autodeposited coating while the other oxidizing agent provides the "oxidizing power" which is needed for the composition to function as an autodepositing composition. In using this type of composition, it is preferred that the other oxidizing agents comprise ferric iron, most preferably ferric fluoride and that the acid constituent comprise hydrofluoric acid. Preferred amounts of the HF/ferric iron activating systems include 0.2 to 5 g/l of HF and 0.5 to 3.5 g/l of ferric iron.

The amount of iodine-containing oxidizing agent for use in the composition will vary depending on the particular compound used, the particular acid used, the acidity of the composition, the resin used, including the degree of unsaturation (if any), and the presence of another oxidant. In view of the numerous factors which have a bearing on the amount of oxidant that can be used, it is recommended that for any particular combination of ingredients, an empirical determination be made respecting the amount of I-containing oxidant to use. Speaking generally, the minimum amount of oxidant should be 1 g/l. When an elemental iodine/iodide salt complex is used, the coating bath should contain preferably 4.4 to 5.6 g/l, as measured by the elemental iodine. When an iodate or periodate is used, the coating bath should contain preferably 1.4 to 2.5 g/l, measured by the iodine-containing ion.

The use of iodine-containing oxidizing agents in accordance with this invention affords various advantages relative to the use of conventional oxidizing agents. For example, gassing, which is commonly associated with the use of hydrogen peroxide is not encountered. Chemical degradation of the resin, excess dissolution of the metal substrate when an excess of oxidizer is present, and the formation of the ferryl ion are avoided. The ferryl ion ($FeO^{++}$) is an unstable compound of tetravalent iron formed as an intermediate in $H_2O_2$-containing compositions. (It was first disclosed by Bray and Gorin in a communication to the editor of J. Am. Chem. Soc. 54:2124-5(1932); Chem. Abs. 26:3450.) It has been reported as a factor in causing the destabilization of an autodepositing composition containing $H_2O_2$ - even at times when the composition is not being used to coat.

Another important benefit which flows from the use of this invention is that autodeposited coatings formed according to this invention can show a marked improvement in corrosion resistance, for example, 300 to 400% over those formed from prior art compositions formulated from the same latex, but with heretofore known conventional oxidizing agents. The following is a theoretical explanation of the reason for observed improvements in corrosion resistance. It is not intended to be limiting. Preferred resins for use in this invention are described above as those which comprise at least one polymer with carbon to carbon double bonds in its structure. Such resins are widely used in forming autodeposited coatings because of their generally superior coatability, appearance, and substrate protection. However, it appears that autodeposited coatings formed from such resins are nevertheless permeable. Such permeability allows corrosive agents to penetrate the coating and attack the underlying metallic surface. It is believed, for the following reasons, that the use of iodine in the composition of the present invention reduces the permeability of coatings formed therefrom. It can theoretically be predicted from the Pauling Electronegativity Chart that $I_2$ which is present in the composition will add to the structure of the resin at the least-substituted carbon atoms. Furthermore, it is pragmatically known that $I_2$ adds rapidly across unsaturated bonds (see ASTM D1959, Standard Test Method for Iodine Value of Drying Oils and Fatty Acids). In addition, it has been observed in the laboratory that the iodine atom does not accumulate in the coating composition as it is used, but is instead bound to the resin. On the basis of the foregoing, it is theoretically concluded that $I_2$ breaks the carbon to carbon double bonds in the polymer and that an iodine ion bonds to one or more of the carbon atoms. It is believed that this results in a decrease in the permeability of the coating to corrosive agents and this in turn leads to unexpectedly large improvements in the corrosion-resistant characteristics of the coating.

As to optional ingredients, pigments or other colorants may be included in the composition, as they are included in known autodepositing compositions. Carbon black dispersions which are commercially available are quite adequate, although others may be used.

Process steps and conditions, namely, cleaning the substrate, immersion in the coating bath, rinsing, optional reaction rinsing, (for example, with chromium-containing solutions), curing or fusion of the coating, etc., can be the same as those disclosed in the prior art for autodeposition.

EXAMPLES

The following examples are illustrative of various embodiments of this invention. Comparative examples are set forth also.

Example 1

This example demonstrates the use of potassium iodate as an oxidizing agent in an autodepositing composition of the present invention. The following autodepositing composition was prepared.

| Ingredients | Amounts, g/l |
|---|---|
| styrene/butadiene latex, 55% solids | 180 |
| hydrofluoric acid | 2.1 |
| potassium iodate | 2 |
| deionized water to 1 liter | q.s. |

Cold rolled, mild steel panels were immersed in the composition at room temperature for 90 seconds. They were removed from the composition and allowed to air-dry for two minutes. They were then rinsed in tapwater for 30 seconds and thereafter immersed for 30 seconds in an aqueous solution containing 9 g/l of sodium dichromate dihydrate. After baking for 10 minutes at 160°C, the coatings were found to be very uniform with near specular gloss. They were 1.3 mils thick (33 $\mu$). The coatings easily withstood 160 inch-lbs reverse impact. Even when cellophane adhesive tape was applied evenly over the impacted area and vigorously torn from the surface, there was no loss of adhesion. Accordingly, adhesion and appearance were excellent.

18

Table 1 below includes data which illustrates the high order of corrosion resistance of panels coated in accordance with the present invention. The coated panels were scribed and then tested in salt spray (ASTM D117).

## Table 1

| Hours in Salt Spray | ASTM Rating * |
|---|---|
| 168 | 10 |
| 336 | 7 |
| 672 | 7 |
| 816 | 7 |

* A "10" rating means no failure whatever. A "0" rating means total failure.

### Comparative Example C-1 and Example 2

This example shows the use of a complex of elemental iodine (valence – zero) and an iodine salt (KI) in an autodepositing composition of the present invention. Using the latex of Example 1, the following composition was prepared:

| Ingredients | Amounts, g/l |
|---|---|
| styrene/butadiene latex, 55% solids | 180 |
| hydrofluoric acid | 2.1 |
| iodine (dissolved in KI solution)* | 5 (iodine) |
| deionized water to make 1 liter | q.s. |
| *added last | |

Prior to adding the iodine, cold rolled steel panels were immersed in the aqueous resin/HF composition for 90 seconds. After withdrawing the panels from the composition, it was observed that they had thereon only a thin, adsorbed layer of coating measuring 0.1 mil (2.5 $\mu$).

Thereafter, iodine crystals were dissolved in an aqueous solution containing barely sufficient KI to effect solution. The iodine solution was added to the other ingredients of the coating composition and panels were immersed therein for 90 seconds. Upon withdrawing the panels form the composition, it was observed that uniform, brown, fairly glossy, lightly textured autodeposited coatings, 0.8 mil thick (20 $\mu$), had formed thereon. When panels were immersed for 5 minutes, the resulting coatings were slightly glossy, lighter in color, and 1.3 mils (33 $\mu$) thick.

### Example 3

This example illustrates the use of sodium periodate as an oxidizing agent in an autodepositing composition of the present invention.

| Ingredients | Amounts, g/l |
|---|---|
| styrene/butadiene latex, 55% solids | 180 |
| hydrofluoric acid | 2.1 |
| $NaIO_4$ | 1.5 |
| deionized water to make 1 liter | q.s |

Cold rolled, mild steel panels were immersed in the above composition for 90 seconds, air-dried two minutes, rinsed in tapwater, immersed 30 seconds in an aqueous 9 g/l of $Na_2Cr_2O_7 \cdot 2H_2O$, and baked 10 minutes at 176°C. The panels had a uniform, glossy, dark tan coating which was 1 mil (25 µ) in thickness. After 168 hours in salt spray (ASTM D117), the coatings were excellent and the panels rated 10. After 336 hours, the coating rating was 8.5, showing less than 1/32-inch (0.8 mm) failure at the scribe.

Examples 1-3 show that even in the absence of any other oxidizer, such as hydrogen peroxide or ferric fluoride, iodate, iodine, and periodate will each effect autodeposition.

Example 4

This example demonstrates the uptake of elemental iodine by a resin comprising a carboxylated styrene/butadiene having double bonds in the polymer chain. In a separate experiment conducted at the same time, it was observed that a saturated all-acrylic resin (acrylonitrile/butyl acrylate/methacrylic acid) at the same solids content did not take up elemental iodine from solution.

One beaker contained 200 ml of an aqueous dispersion of 18 g of a carboxylated styrene/butadiene copolymer, the source of which was a latex thereof. A second beaker contained 200 ml of an aqueous dispersion of 18 g of the aforementioned all-acrylic copolymer, its source also being a latex. Starch indicator solution was added to each of beakers.

A complex solution of iodine in potassium iodide was prepared. One dropperful of the iodine complex was added to the acrylic dispersion. A positive reaction to free iodine was shown by the starch inidicator. After addition of 30 dropperfuls of the iodine solution to the carboxylated styrene/butadiene dispersion, there was no indication of free iodine by the starch indicator.

As mentioned above, it has been observed that autodepositing compositions comprising iodine-containing oxidants and resins containing carbon to carbon double bonds in recurring units are capable of forming autodeposited coatings which exhibit a substantial increase in the resistance to corrosion, relative to autodeposited coatings formed from like compositions but containing a saturated resin. This improvement appears to be related to the addition of elemental iodine across the double bonds and possibly as well as to the formation of a light conversion coating between the substrate and the resin.

Example 5

This example illustrates an autodepositing composition prepared from glacial acetic acid and iodic acid, as set forth below:

| Ingredients | Amounts, g/l |
|---|---|
| styrene/butadiene latex, 55% solids | 180 |
| glacial acetic acid | 20 |
| iodic acid | 1.5 |
| deionized water to 1 liter | q.s. |

Cold rolled, mild steel panels were immersed in the above composition at room temperature for 90 seconds. They were removed from the composition, allowed to air-dry for 60 seconds, rinsed in tapwater, and then baked for 10 minutes at 176°C.

The coatings were brown, uniform, of fairly high gloss, and 1.3 mils (33 μ) in thickness. A series of pale concentric lines showed up strongly on the highly glossy surface. The coating easily withstood 160 inch-pounds impact/tape.

Example 6

The steps of Example 5 were repeated using the same autodepositing composition, except that after the tapwater rinse, and before baking, the coated panels were subjected to a rinse for 30 seconds with an aqueous solution of sodium chromate. The coatings were brown, uniform, glossy and very attractive, having the appearance of polished brown leather.

Coated panels were subjected also to salt spray testing (ASTM D117) to determine their resistance to corrosion. The results are set forth in Table 2 below.

Table 2

| Hours in Salt Spray | Scribe failure | ASTM Rating |
|---|---|---|
| 168 | 1/64" (0.4 mm) | 9.0 |
| 336 | 1/8" (3.2 mm) | 6.0 |
| 504 | severe corrosion | 0 |

In summary, it can be said that the present invention provides a number of important advantages. In using the iodine-containing oxidizing agent in compositions which include a saturated or unsaturated resin or mixture of such resins, advantages are realized because the use of such oxidant does not cause gassing, it does not attack or degrade dispersants associated with the dispersed resin solids, and it tends to form a conversion coating which appears to improve the corrosion-resistant properties of the autodeposited coating. Maintaining the coating effectiveness of the composition, including control of the redox potential of compositions containing such oxidants, is relatively facile. The unintentional use of excess amounts of the I-oxidant does not lead to problems of the type encountered when excess amounts of hydrogen peroxide are used. Additional improvements in corrosion-resistance can be realized by use of unsaturated resins, as described.

CLAIMS

1. An autodepositing composition for forming an autodeposited resinous coating on a metallic surface comprising an acidic aqueous solution having dissolved therein acid and oxidizing agent and having dispersed therein resin solids, said ingredients being present in amounts effective to form said coating, and wherein said oxidizing agent is elemental iodine complexed with a water soluble iodide, an iodate salt or free acid, a periodate salt or free acid, or any mixture of the foregoing.

2. The composition of Claim 1 wherein said iodide, iodate salt or periodate salt is an alkali metal or ammonium compound.

3. The composition of Claim 1 wherein: said water soluble iodide is at least one of LiI, NaI, KI, RbI, or $NH_4I$; said iodate is at least one of $KIO_3$, $NaIO_3$, $NH_4IO_3$, or $HIO_3$; and said periodate is at least one of $KIO_4$, $NaIO_4$, or $HIO_4$.

4. The composition of Claim 1 wherein said oxidizing agent is: iodine complexed with sodium iodide or potassium iodide; sodium or potassium iodate; iodic acid; sodium or potassium periodate; periodic acid; or any mixture of the foregoing.

5. The composition of Claim 1 wherein said oxidizing agent is potassium iodate, elemental iodine complexed with potassium iodide, or sodium periodate.

6. The composition of Claim 1 wherein said oxidizing agent is present in an amount of at least about 1 g/l.

7. The composition of Claim 1 wherein said oxidizing agent is elemental iodine complexed with a water soluble iodide salt and is present in an amount of about 4.4 to about 5.6 g/l of composition, as measured by the elemental iodine.

8. The composition of Claim 1 wherein said oxidizing agent is either an iodate or a periodate and is present in an amount of about 1.4 to about 2.5 g/l of composition, as measured by the iodine-containing ion.

9. The composition of Claim 1 wherein said oxidizing agent is iodic acid or periodic acid.

10. The composition of Claim 1 wherein said acid is present in an amount sufficient to make the pH of said composition more acidic than about 5, preferably about 1.6 to about 3.8.

11, The composition of Claim 1 wherein said acid is acetic, citric, fumaric, diglycolic, maleic, or any mixture thereof., preferably acetic acid.

12. The composition of Claim 11 wherein said acid is acetic acid and is present in an amount of about 15 to about 25 g/l.

13. The composition of Claim 1 wherein said acid is hydrofluoric acid.

14. The composition of Claim 13 wherein said hydrofluoric acid is present in an amount of about 0.4 to about 5 g/l.

15. The composition of Claim 1 including also ferric iron oxidant, and wherein said acid is hydrofluoric acid and said oxidizing agent is an iodate or periodate.

16. The composition of Claim 1 wherein said acid includes hydrofluoric acid and including also a silicate-containing pigment.

17. The composition of any one of Claims 1 to 16 wherein said resin solids include an unsaturated resin.

18. The composition of Claim 17 wherein said resin solids include a mixture of unsaturated resin solids and saturated resin solids.

19. A process for coating a metallic surface with an autodeposited resinous coating comprising immersing said surface in an autodepositing composition as defined in any one of Claims 1 to 20 for a sufficient period of time to form said coating and thereafter withdrawing the coated surface from said composition.

20. A process according to Claim 19 wherein said metallic surface is iron or an alloy of iron or

. wherein said metallic surface is zinc or an alloy of zinc.

21. A surface having thereon an autodeposited resinous coating in which the polymeric structure of the resin of said coating includes therein iodine bonded to one or more carbon atoms which are present in said polymeric structure and which were originally linked by double bonds.